(19) **Europäisches Patentamt / European Patent Office / Office européen des brevets**

(11) **EP 1 679 119 B1**

(12) **EUROPEAN PATENT SPECIFICATION**

(45) Date of publication and mention
of the grant of the patent:
**27.08.2008 Bulletin 2008/35**

(51) Int Cl.:
*B01J 35/00* (2006.01)      *F01N 3/022* (2006.01)
*F01N 3/28* (2006.01)       *F01N 3/023* (2006.01)
*F01N 3/035* (2006.01)

(21) Application number: **05028051.0**

(22) Date of filing: **21.12.2005**

(54) **Method of production of a filter catalyst for exhaust gas purification of a diesel engine**

Verfahren zur Herstellung eines Katalysators zur Reinigung von Abgasen einer diesel Brennkraftmaschine

Procédé de fabrication d'un filtre catalyseur pour la purification de gaz d'échappement d'un moteur diesel

(84) Designated Contracting States:
**DE FR GB**

(30) Priority: **24.12.2004   JP 2004372665**

(43) Date of publication of application:
**12.07.2006   Bulletin 2006/28**

(60) Divisional application:
**07018288.6 / 1 859 864**

(73) Proprietor: **Cataler Corporation**
**Shizuoka-ken**
**437-1492 (JP)**

(72) Inventors:
• **Endo, Takayuki**
**Kakegawa-city**
**Shizuoka-pref., 437-1492 (JP)**
• **Aono, Norihiko**
**Kakegawa-city**
**Shizuoka-pref., 437-1492 (JP)**

(74) Representative: **Becker Kurig Straus**
**Patentanwälte**
**Bavariastrasse 7**
**80336 München (DE)**

(56) References cited:
EP-A- 1 312 776         EP-A- 1 486 248
EP-A- 1 598 111         US-A- 5 248 251
US-A1- 2002 022 272     US-A1- 2004 176 246

• **PATENT ABSTRACTS OF JAPAN vol. 010, no. 178 (C-355), 21 June 1986 (1986-06-21) & JP 61 025644 A (TOYOTA MOTOR CORP), 4 February 1986 (1986-02-04)**
• **PATENT ABSTRACTS OF JAPAN vol. 2003, no. 09, 3 September 2003 (2003-09-03) & JP 2003 154223 A (IBIDEN CO LTD), 27 May 2003 (2003-05-27)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method of production of a filter catalyst for exhaust gas purification use of a diesel engine improving the purification efficiency of hydrocarbons, carbon monoxide, and nitrogen oxides, in particular, particulate matter PM, contained in the exhaust gas of a diesel engine and improved in the years of service life of the filter catalyst.

BACKGROUND ART

The harmful substances contained in the exhaust gas of an engine are purified by various catalysts and methods. In particular, the exhaust gas of a diesel engine contains particulate matter PM etc., so purification is more difficult than with a gasoline engine.

Japanese Patent Publication (A) No. 2002-001124 discloses an exhaust gas purification catalyst of a diesel engine carrying a large amount of a hydrocarbon absorbent constituted by zeolite at the upstream side of the flow of exhaust gas and carrying a large amount of oxide absorbents constituted by nickel oxide and iron oxide at the downstream side. International Publication WO98/47605 discloses an exhaust gas purification catalyst carrying zeolite at the upstream side of the flow of exhaust gas and carrying platinum at the downstream side.

The diesel particulate trapping filter disclosed in Japanese Patent Publication (A) No. 61-57223 is a filter able to burn off the trapped diesel particulate by an external ignition means or other suitable means. This trapping filter is comprised of a substrate of a ceramic foam filter or honeycomb filter at the inside wall surfaces of the pores of which a γ-alumina layer is coated. This alumina layer carries 5 to 20 g of copper oxide and platinum, palladium, or another platinum group-based oxidation catalyst per liter filter capacity as a catalyst component.

EP 1 312 776 refers to an exhaust gas purification system having a diesel particulate filter. An example of such a filter comprises several exhaust gas passages, each of them having an upstream portion as inlet and a downstream portion as outlet. The passages are divided in several zones, in which a strong oxidation power catalyst is located at the upstream portion and no catalyst at the downstream portion to decrease the oxidation power within the catalyst in several stages by employing oxidation catalysts of different strength.

In US 2004/0176246 catalyst filters and their respective preparation methods are disclosed. The described filter catalysts may be prepared in a manner that more catalyst, e.g. palladium, may be placed where particulate matter will accumulate during use and lower amounts of catalyst at areas having less particle accumulation/concentration. The catalyst may be deposited to exhibit a concentration gradient across the thickness (i.e. from the inlet to the outlet) of the filter.

EP 1 486 248 pertains to an integrated multi-functional catalyst system with a diesel particulate filter. This filter may have varying amounts of catalyst disposed, e.g. higher amounts at the inlet site than at the outlet for improving the function of the catalyst system. The catalyst material(s), such as platinum, is/are applied by a wash-coating step. In particular, a first wash-coat layer may be applied to the interior wall surface adjacent the inlet side, and a second washcoat layer applied to the exterior wall surface and adjacent the outlet side.

US 2002/0022272 relates to poisoning and deactivation of catalysts. Filter catalysts comprising a precious metal out of a platinum group are selectively poisoned. The poison, such as phosphorous and/or a zinc compound, may be deposited in various zones of the catalyst in different concentrations, e.g. in higher concentrations at the inlet than the outlet. The poison may be applied by zone coating.

Japanese patent JP 61025644 discloses a catalyst for purifying waste gas and a method for its preparation. An activated alumina layer is formed on a monolithic carrier, the carrier is immersed in a platinum-containing solution, dried and calcinated. The steps of immersing, drying and calcinating are then repeated with a rhodium-containing solution. In order to prevent deposition of the precious metal at certain areas, said areas are masked.

DISCLOSURE OF THE INVENTION

According to the present invention the invention pertains to a method of production of a filter catalyst for exhaust gas purification of a diesel engine having a filter structure carrying a precious metal, including the steps of:

preparing a filter structure, comprising an upstream portion at the side where the exhaust gas flows in, a downstream portion at the side where the exhaust gas flows out, and a midstream portion positioned between the upstream portion and downstream portion;
coating a slurry including an oxide powder over the filter structure, then drying and firing it;
immersing the coated filter structure from the end face of the upstream portion to the downstream portion in a solution of the precious metal to make it carry the precious metal, then taking out and drying the filter structure; and immersing only the upstream portion of precious metal-coated filter structure in a solution of the precious metal to make it carry the precious metal, then taking out and drying the filter structure, in that the precious metal is carried at the end face of the upstream portion at a high concentration and at the downstream portion in a low concentration.

When a catalyst structure for exhaust gas purification of a diesel engine has a precious metal catalyst evenly present throughout the catalyst structure, it is difficult to secure the temperature for burning the particulate matter, that is, the PM, throughout the catalyst structure. In particular, at the time of engine startup, the temperature is low, so the burn rate of the PM conspicuously deteriorates, the particulate matter PM builds up, and the pressure loss ends up rising.

The filter catalyst for exhaust gas purification of a diesel engine as detailed improves the burn rate of the particulate matter PM etc. at the time of a low temperature by carrying the precious metal catalyst at a high concentration at the upstream portion of the filter structure at the exhaust gas inflow side so as to cause the metal catalyst and the reactive substances in the exhaust gas to sufficiently react, use the heat of reaction to further raise the temperature, secure sufficient temperature in the filter catalyst structure as a whole, and burn off the particulate matter PM.

A filter catalyst as detailed is a filter catalyst for exhaust gas purification of a diesel engine having a filter structure carrying a precious metal, comprised of a filter structure having an upstream portion at the side where the exhaust gas flows in, a downstream portion at the side where the exhaust gas flows out, and a midstream portion positioned between the upstream portion and downstream portion, carrying a precious metal at the upstream portion of the side where the exhaust gas flows in at a high concentration and at the downstream portion in a low concentration.

Further, in the filter catalyst as detailed, when expressing the amounts of the precious metal carried at the different portions by relative concentrations indexed to the average carried amount comprised of the total amount of the precious metal carried at the filter structure upstream portion at a high concentration and at the downstream portion at a low concentration averaged for the different portions as "1" and calculating standard deviation from said relative concentrations, the filter structure having the upstream portion, midstream portion, and downstream portion has a standard deviation of the content of the precious metal of 0.10 or more.

Further, the filter catalyst as detailed has a filter structure having an upstream portion, a downstream portion, and a midstream portion in which, when indexed to the total length of the filter structure as "100", the length of the upstream portion is not more than 50.

Further, the filter catalyst as detailed has a filter structure having an upstream portion, a downstream portion, and a midstream portion in which, when indexed to the amount of precious metal carried in the total length of the filter structure as "100", the amount of precious metal carried of the upstream portion is 150 or more.

The method of production of a filter catalyst is a method of production of a filter catalyst for exhaust gas purification of a diesel engine having a filter structure carrying a precious metal, including a step of preparing a filter structure, a step of coating a slurry including an oxide powder over the filter structure, then drying and firing it, a step of immersing the coated filter structure from the end face of the upstream portion to the downstream portion in a solution of the precious metal to make it carry the precious metal, then taking out and drying the filter structure, and a step of immersing the precious metal-coated filter structure from the end face of the upstream portion to only the upstream portion in a solution of the precious metal to make it carry the precious metal, then taking out and drying the filter structure.

Further, the filter catalyst as detailed contains as the precious metal carried on the filter structure at least one element selected from the group of Pt, Pd, Rh, Ru, Ir, Ag, and Au as an active ingredient.

Further, the filter structure provided in the filter catalyst as detailed is formed by any of a cordierite wall flow filter, silicon carbide wall flow filter, ceramic wall flow filter or a ceramic foam other than cordierite and silicon carbide, and metal nonwoven fabric filter.

Further, the solute used for the slurry coating the filter structure as detailed is at least one type of $Al_2O_3$, $SiO_2$, $TiO_2$, $ZrO_2$, $CeO_2$, a Ba compound, an oxide of a transition metal other than a transition metal contained in these oxides, a rare earth metal oxide, an alkali metal oxide, an alkali earth metal, and complex oxides of the same.

The filter catalyst as detailed has the filter structure used for this catalyst carry the precious metal at the upstream portion at the side where the exhaust gas flows in at a high concentration and carry the precious metal at the downstream portion at a low concentration so that the precious metal catalyst carried at the high temperature side of the exhaust gas more easily reacts with in particular the CO, HC, $NO_x$, and PM and that heat of reaction further raises the reaction temperature of the catalyst.

The filter catalyst as detailed in particular is improved in purification of particulate matter (PM), so exhibits a superior effect in purification of the exhaust gas of diesel engines which discharge large amounts of particulate matter.

BRIEF DESCRIPTION OF THE DRAWINGS

FIG. 1 shows a filter structure used for a filter catalyst as detailed.
FIG. 2 shows a filter structure used in a conventional filter catalyst.
FIG. 3 shows the distribution of a precious metal at different portions in an example and comparative example by relative concentration.
FIG. 4 shows the relationship of the PM burn rate at different temperatures of Example 1 in the case indexed to the PM burn rate of Comparative Example 1 at the different temperatures as "1" and the temperatures.

BEST MODE FOR WORKING THE INVENTION

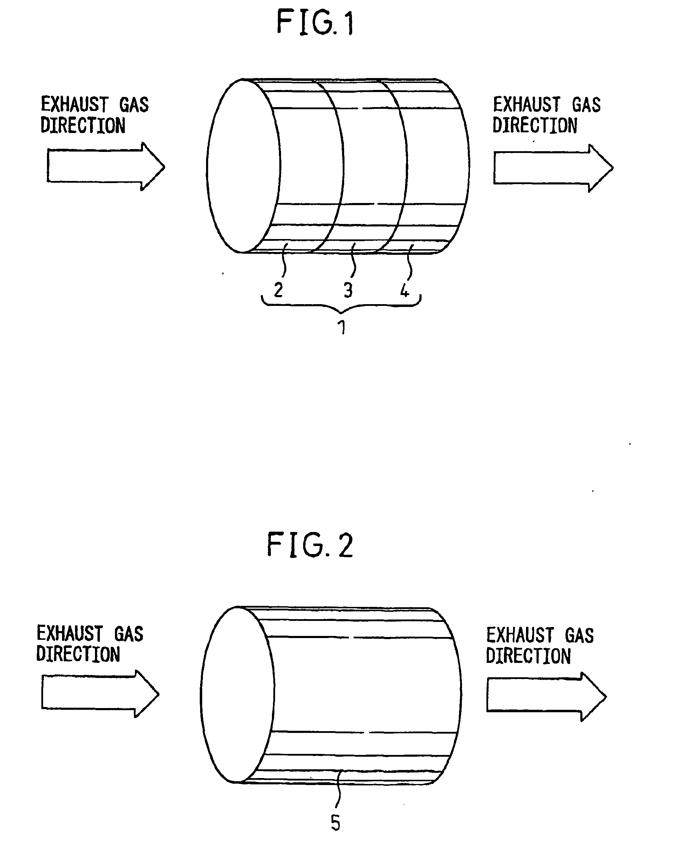

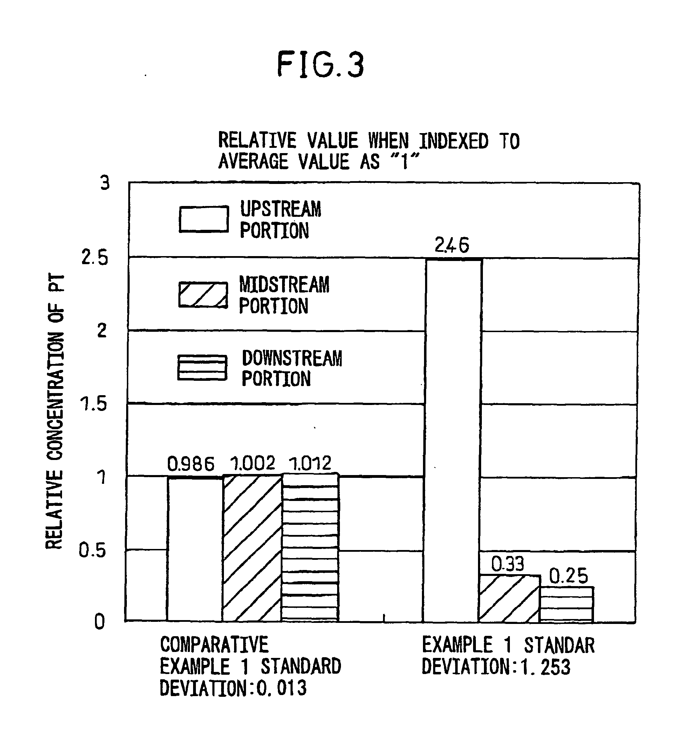

In the filter catalyst for exhaust gas purification of a diesel engine as detailed, the reaction between the precious metal catalyst and exhaust gas is promoted at the exhaust gas inflow side where the exhaust gas is high in temperature by, as shown in FIG. 1 and FIG. 3, carrying a high concentration of the precious metal catalyst only at an upstream portion 2 of a filter structure 1 at the side where the exhaust gas flows in and carrying relatively low concentrations of the precious metal catalyst at the filter structure's midstream portion 3 and downstream portion 4. Further, the filter catalyst as detailed, as shown in FIG. 3, carries a high concentration of the precious metal catalyst at the upstream portion 2 of the filter structure 1, but makes the precious metal catalyst carried at the midstream portion 3 and the downstream portion 4 low in concentration so as to enable it to obtain substantially the same amount of the precious metal carried as the total amount used in a conventional filter catalyst for exhaust gas purification use of a diesel engine.

As another mode, a filter structure carrying an initially low concentration of precious metal is immersed from the end face of the upstream portion to only the upstream portion in a solution of the precious metal to make it carry the precious metal and thereby form a filter structure carrying a high concentration of the precious metal at the upstream portion of the filter structure.

On the other hand, the filter structure of a conventional filter catalyst, as shown in FIG. 2, has the precious metal uniformly distributed and carried at the filter structure from the side where the exhaust gas flows in to the side where it flows out, so as shown in Comparative Example 1 of Table 2 and FIG. 3, the relative concentration of the precious metal is also uniformly distributed. Therefore, it is difficult to promote a reaction between the catalyst and the substances to be purified at the upstream portion of the filter structure at the side where the exhaust gas flows in. When the filter structure is a diameter of 129 mm and a length of 150 mm in size and the average distribution of the precious metal of the catalyst at the different portions is "1", as shown in FIG. 3, the standard deviation of the relative concentration of Example 1 at the upstream portion, midstream portion, and downstream portion is 1.253, while the standard deviation in Comparative Example 1 where the precious metal catalyst is uniformly distributed and carried is 0.013.

Example 1

The filter structure used in the filter catalyst of Example 1 is made of cordierite having 300 cells per square centimeter and having a thickness of 300 $\mu$m. The filter structure is formed from a cordierite material having a diameter of 129 mm, a length of 150 mm, and a volume of 2000 cm$^3$ and having alternately sealed end faces. This filter structure was wash coated by alumina, ceria, zirconia, and barium oxide.

Specifically, this wash coating was performed as follows. First, alumina powder, ceria powder, zirconia powder, barium oxide, and water were mixed to a slurry (aqueous suspension) state to prepare a solution. The above filter structure was immersed in this solution so as to coat this filter structure with alumina. The alumina etc.-coated filter structure was taken out from this solution, blown with air to remove excess solution, then was dried and fired to obtain an alumina-coated filter structure. The obtained filter structure contained, in 1 liter volume of the filter structure, coated alumina in an amount of 50 g, ceria in an amount of 20 g, zirconia in an amount of 50 g, and barium oxide in an amount of 20 g.

Further, to make the obtained alumina-coated filter structure carry Pt, the filter structure was immersed from the end of the upstream portion at the side where the exhaust gas flows in to the downstream end in 4000 cm$^3$ of a low concentration Pt aqueous solution in which a predetermined Pt salt was dissolved for 60 minutes, then dried. Further, the filter structure was immersed from the upstream end at the side where the exhaust gas flows in down to 30 cm in 100 cm$^3$ of a Pt aqueous solution in which a predetermined Pt salt was dissolved, then dried to obtain the Pt-carrying filter structure of this example. The value of the standard deviation based on the relative concentration of Pt of the obtained Pt-carrying filter structure was, as shown in Table 2, more than 1.0, that is, 1.253.

Example 2

The material of the filter structure used in the filter catalyst of Example 2 is a cordierite material similar to that of Example 1. This filter structure was treated by the same steps as in Example 1 except for using titania for wash coating. Further, the obtained titania-coated filter structure was made to carry Pt by steps similar to Example 1 for carrying Pt. The value of the standard deviation based on the relative concentration of Pt of the obtained Pt-carrying titania coating was, as shown in Table 2, more than 1.0, that is, 1.323.

Comparative Example 1

Like in Example 1, this filter structure was wash coated by alumina, ceria, zirconia, and barium oxide.
The obtained filter structure contained, in 1 liter volume of the filter structure, coated alumina in an amount of 50 g, ceria in an amount of 20 g, zirconia in an amount of 50 g, and barium oxide in an amount of 20 g.
Further, to make the obtained filter structure carry Pt, the filter structure was immersed from the end of the upstream portion at the side where the exhaust gas flows in to the downstream end in 4000 cm$^3$ of a Pt aqueous solution in which a predetermined Pt salt was dissolved for 60 minutes, then dried. The value of the standard deviation based on the relative concentration of Pt at the upstream portion of the obtained Pt-carrying structure at the side where the exhaust gas flows in was less than 0.10, that is, 0.032.

Comparative Example 2

The material of the filter structure used in the filter catalyst of Comparative Example 2 is a cordierite material similar to that of Comparative Example 1. This filter structure was treated by the same steps as in Comparative Example 1 except for using titania for wash coating. Further, the obtained titania-coated filter structure was made to carry Pt by steps similar to Comparative Example 1 for carrying Pt. The value of the standard deviation based on the relative concentration of Pt at the upstream portion of the obtained Pt-carrying titania-coated filter structure at the side where the exhaust gas flows in was less than 0.10, that is, 0.030.
Table 1 shows the amounts of Pt carried at the upstream portions, midstream portions, and downstream portions of the filter catalysts prepared in Examples 1 and 2 and Comparative Examples 1 and 2 and their average values. The filter structure of each filter catalyst was divided into three equal parts from the side where the exhaust gas flows in. These were designated the upstream portion, midstream portion, and downstream portion. The amounts of Pt carried at the different portions of the filter structures were measured by a fluorescent X-ray measurement apparatus. Based on the results of measurement of the amounts of Pt carried, the relative concentrations of the different parts indexed to that average value as "1" and the standard deviations are shown in Table 2. The filter structures of the filter catalysts of Examples 1 and 2 had standard deviations of the relative values of 1.2 or more compared with the filter structures of Comparative Examples 1 and 2.

Table 1

|  | Ex. 1 | Ex. 2 | Comp. Ex. 1 | Comp. Ex. 2 |
|---|---|---|---|---|
| Upstream portion | 12.30 | 12.70 | 4.97 | 4.98 |
| Midstream portion | 1.65 | 1.50 | 5.05 | 5.07 |
| Downstream portion | 1.25 | 1.00 | 5.1 | 5.1 |
| Average value | 5.07 | 5.07 | 5.04 | 5.05 |

Table 2

|  | Ex. 1 | Ex. 2 | Comp. Ex. 1 | Comp. Ex. 2 |
|---|---|---|---|---|
| Upstream portion | 2.46 | 2.54 | 0.986 | 0.986 |
| Midstream portion | 0.33 | 0.3 | 1.002 | 1.004 |
| Downstream portion | 0.25 | 0.2 | 1.012 | 1.01 |
| Average value | 1.253 | 1.323 | 0.013 | 0.012 |

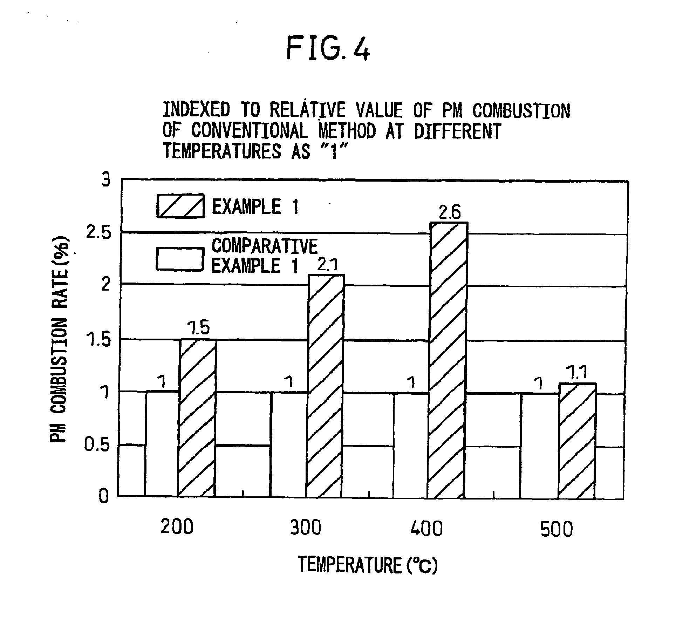

The PM burn test of the filter structures prepared by Examples 1 and 2 and Comparative Examples 1 and 2 was measured by the following method.
Before the measurements of the PM burn test of the filter structure used for the filter catalysts, the filter catalysts were pseudo-degraded by holding them in a 700°C electric oven for 50 hours. After that, for testing in an exhaust system of a turbocharged type liter direct-injection diesel engine, each filter catalyst was mounted in this exhaust system using a special container. The diesel engine was run at 2000 rpm and the torque changed to trap the PM, then a PM burn test was conducted in the steady state in the temperature range of 200 to 500°C. The results of the PM burn test for Example 1 and Comparative Example 1 shown in the following Table 3 are shown in FIG. 4.
The weight of the filter catalyst after trapping PM and the weight of the filter catalyst after the steady state in the temperature range of 200 to 500°C were measured. Based on the weights (g), the following equation (1) for calculating the PM purification rate was used to calculate the burn rate.

$$\text{PM burn rate} = \{(\text{weight of filter catalyst after trapping PM} - \text{weight of filter catalyst after steady state})/(\text{weight of filter catalyst after trapping PM})\} \times 100 \quad (1)$$

Table 3 shows the relative concentrations of PM burned of Examples 1 and 2 and Comparative Example 2 at different temperatures when indexed to the PM burn rates of Comparative Example 1 at different temperatures as "1". Further, FIG. 4 shows the relationship between the PM burn rate of Example 1 at different temperatures when indexed to the PM burn rate of Comparative Example 1 at different temperatures as "1" and temperatures. As clear from Table 3 and FIG. 4, the PM burn rates of Examples 1 and 2 are particularly superior compared with those of Comparative Examples 1 and 2.

Table 3

| Temp. (°C) | Ex. 1 | Ex. 2 | Comp. Ex. 1 | Comp. Ex. 2 |
|---|---|---|---|---|
| 200 | 1.5 | 1.7 | 1 | 1.3 |
| 300 | 2.1 | 2.3 | 1 | 1.5 |
| 400 | 2.6 | 2.7 | 1 | 1 |
| 500 | 1.1 | 1.1 | 1 | 1 |

Examples 3 to 6 show filter structures changed in length of the upstream portion to 10 to 60 when indexed to the total as "100" as shown in Table 4. Further, the amounts of Pt of the filter structures of Examples 3 to 6 were an amount of Pt carried at the upstream portion of the filter structure fixed to 7.5 g/liter and an amount of Pt carried of the filter structure as a whole of the same amount as Example 1, that is, 5 g/liter. The standard deviation of the amount of Pt carried when changing the length of the upstream portion of the filter structure between 10 to 60 changed from 0.284 to 1.083. However, there is a de facto limit to the amount of Pt carried at the upstream portion. Therefore, a standard deviation of about 2.5 is the upper limit.

Table 4

Fr Length Ratio
(Length of Upstream Portion Indexed to Total Length of Catalyst as "100")

| Temp. (°C) | 10 Ex. 3 | 30 Ex. 4 | 50 Ex. 5 | 60 Ex. 6 | 100 Comp. Ex. 1 | 100 Comp. Ex. 2 |
|---|---|---|---|---|---|---|
| 200 | 1.5 | 1.7 | 1.6 | 1.1 | 1 | 1.1 |
| 300 | 2.1 | 2.3 | 2.2 | 1.2 | 1 | 1.2 |
| 400 | 2.6 | 2.7 | 2.7 | 1.2 | 1 | 1 |
| 500 | 1.1 | 1.1 | 1.2 | 1 | 1 | 1 |
| Standard deviation | 0.284 | 0.402 | 0.693 | 1.083 | | |

The amounts of Pt carried in the filter structures of Examples 7 to 10 were changed to 120 to 450 at the upstream portions when indexed to the total as "100" as shown in Table 5. Further, the amounts of Pt of the filter structures of Examples 7 to 10 were the same amount as Example 1, that is, 5 g/liter, and the widths carrying Pt at the upstream portions of the filter structures were fixed to 30 mm in the same way as Example 1. In Examples 7 to 10, as shown in Table 5, when changing the relative value of the amount of Pt carried at the relative length 30 of the upstream portion to 120 to 450, the standard deviation of the amount of Pt carried changed from 0.140 to 1.595. There is a de facto limit to the amount of Pt carried at the upstream portion. Therefore, a standard deviation of the amount of Pt carried at the upstream portion of about 2.5 is the upper limit.

Table 5

Fr Relative Amount Carried
(Amount Carried at Upstream Portion Indexed to Amount Carried of Catalyst as "100")

| Temp. (°C) | 100 Comp. Ex. 1 | 100 Comp. Ex. 2 | 120 Ex. 7 | 150 Ex. 8 | 300 Ex. 9 | 450 Ex. 10 |
|---|---|---|---|---|---|---|
| 200 | 1 | 1.1 | 1.3 | 1.4 | 1.6 | 1.8 |
| 300 | 1 | 1.2 | 1.5 | 1.8 | 2.2 | 2.5 |
| 400 | 1 | 1 | 1.3 | 2.1 | 2.7 | 3 |
| 500 | 1 | 1 | 1.1 | 1.1 | 1.2 | 1.4 |
| Standard deviation | | | 0.140 | 0.333 | 1.083 | 1.595 |

**Claims**

1. A method of production of a filter catalyst for exhaust gas purification of a diesel engine having a filter structure (1) carrying a precious metal, including the steps of:

   preparing a filter structure (1), comprising an upstream portion (2) at the side where the exhaust gas flows in, a downstream portion (4) at the side where the exhaust gas flows out, and a midstream portion (3) positioned between the upstream portion (2) and downstream portion (4);
   coating a slurry including an oxide powder over the filter structure (1), then drying and firing it;
   immersing the coated filter structure (1) from the end face of the upstream portion (2) to the downstream portion (4) in a solution of the precious metal to make it carry the precious metal, then taking out and drying the filter structure (1); and
   immersing only the upstream portion (2) of precious metal-coated filter structure (1) in a solution of the precious metal to make it carry the precious metal, then taking out and drying the filter structure (1), in that the precious metal is carried at the end face of the upstream portion (2) at a high concentration and at the downstream portion (4) in at low concentration.

2. The method according to claim 1, wherein when indexed to the total length of the filter structure (1) as "100", the length of the upstream portion (2) is not more than 50.

3. The method according to claim 1 or 2, wherein when indexed to the amount of precious metal carried in the total length of said filter structure (1) as "100", the amount of precious metal carried of said upstream portion (2) is 150 or more.

4. The method according to claim 1, wherein the precious metal carried on the filter structure (1) is at least one element select from the group of Pt, Pd, Rh, Ru, Ir, Ag and Au.

5. The method according to claim 1, wherein the filter structure (1) provided in the filter catalyst of the present invention is formed by any of a cordierite wall flow filter, silicon carbide wall flow filter, ceramic wall flow filter, or a ceramic foam other than cordierite and silicon carbide and metal nonwoven fabric filter.

6. The method according to claim 1, wherein the solute used for the slurry coating the filter structure (1) is at least one type of $Al_2O_3$, $SiO_2$, $TiO_2$, $zrO_2$, $CeO_2$, a Ba-compound, an oxide of a transition metal other than Ti, Zr or Ce, a rare earth metal oxide, an alkali metal oxide, an alkali earth metal, and complex oxides of the same.

**Patentansprüche**

1. Verfahren zur Herstellung eines Filterkatalysators für eine Abgasreinigung eines Dieselmotors mit einer Filterstruktur (1), die ein Edelmetall trägt, beinhaltend die Schritte:

   Erstellen einer Filterstruktur (1), die einen stromaufwärts gelegenen Bereich (2) an der Seite umfasst, an der das Abgas einströmt, einen stromabwärts gelegenen Bereich (4) an der Seite, an der das Abgas ausströmt, und einen strommittig gelegenen Bereich (3), der zwischen dem stromaufwärts gelegenen Bereich (2) und dem stromabwärts gelegenen Bereich (4) positioniert vorliegt;

Beschichten einer Aufschlämmung, umfassend ein Oxidpulver über der Filterstruktur (1), dann Trocknen und Brennen;

Eintauchen der beschichteten Filterstruktur (1) von der Stirnfläche des stromaufwärts gelegenen Bereichs (2) zu dem stromabwärts gelegenen Bereich (4) in eine Lösung des Edelmetalls, so dass sie das Edelmetall trägt, dann Entnehmen und Trocknen der Filterstruktur (1), und

Eintauchen von lediglich des stromaufwärts gelegenen Bereichs (2) einer mit Edelmetall beschichteten Filterstruktur (1) in eine Lösung des Edelmetalls, so dass sie das Edelmetall trägt, dann Entnehmen und Trocknen der Filterstruktur (1), so dass das Edelmetall an der Stirnfläche des stromaufwärts gelegenen Bereichs (2) mit einer hohen Konzentration und an dem stromabwärts gelegenen Bereich (4) mit einer niedrigen Konzentration getragen wird.

**2.** Verfahren nach Anspruch 1, wobei bei einer Einteilung der Gesamtlänge der Filterstruktur (1) als "100", die Länge des stromaufwärts gelegenen Bereichs (2) nicht mehr

**3.** Verfahren nach Anspruch 1 oder 2, wobei bei einer Einteilung der Menge des in der Gesamtlänge der Filterstruktur (1) getragenen Edelmetalls als "100", die Menge des auf dem stromaufwärts gelegenen Bereich (2) getragenen Edelmetalls 150 oder mehr beträgt.

**4.** Verfahren nach Anspruch 1, wobei das auf der Filterstruktur (1) getragene Edelmetall mindestens ein Element ausgewählt aus der Gruppe bestehend aus Pt, Pd, Rh, Ru, Ir, Ag und Au ist.

**5.** Verfahren nach Anspruch 1, wobei die in dem Filterkatalysator der vorliegenden Erfindung bereitgestellte Filterstruktur (1) durch irgendeinen von einem Cordierit-Wandstromfilter, Siliziumcarbid-Wandstromfilter, Keramikwandstromfilter oder einem keramischen Schaum gebildet wird, der anders ist als Cordierit und Siliziumcarbid und nicht gewebte Metallgewebefilter.

**6.** Verfahren nach Anspruch 1, wobei die gelöste Substanz, die für die Aufschlämmungsbeschichtung der Filterstruktur (1) verwendet wurde, als mindestens ein Typ von $Al_2O_3$, $SiO_2$, $TiO_2$, $ZrO_2$, $CeO_2$, einer Ba-Verbindung, einem Oxid eines Übergangmetalls anders als Ti, Zr oder Ce, einem seltenen Erdmetalloxid, einem Alkalimetalloxid, einem Alkalierdmetall, und komplexen Oxiden der gleichen, vorliegt.

**Revendications**

**1.** Procédé de fabrication d'un filtre catalyseur pour la purification de gaz d'échappement d'un moteur diesel ayant une structure de filtre (1) contenant un métal précieux, comprenant les étapes consistant à :

préparer une structure de filtre (1), comprenant une partie amont (2) du côté où le gaz d'échappement entre, une partie aval (4) du côté où le gaz d'échappement sort, et une partie médiane (3) positionnée entre la partie amont (2) et la partie aval (4) ;

revêtir d'une pâte contenant un oxyde en poudre la structure de filtre (1), ensuite la sécher et la cuire ;

immerger la structure de filtre revêtue (1) depuis la face d'extrémité de la partie amont (2) vers la partie aval (4) dans une solution du métal précieux pour lui faire absorber le métal précieux, ensuite retirer et faire sécher la structure de filtre (1) ; et

immerger uniquement la partie amont (2) de la structure de filtre revêtue de métal précieux (1) dans une solution du métal précieux pour lui faire absorber le métal précieux, ensuite retirer et faire sécher la structure de filtre (1), de sorte que le métal précieux soit absorbé à la face d'extrémité de la partie amont (2) à une concentration élevée et à la partie aval (4) à une concentration faible.

**2.** Procédé selon la revendication 1, dans lequel quand elle se rapporte à la longueur totale de la structure de filtre (1) qui est égale à "100", la longueur de la partie amont (2) n'est pas supérieure à 50.

**3.** Procédé selon la revendication 1 ou 2, dans lequel quand elle se rapporte à la quantité de métal précieux contenu dans la longueur totale de ladite structure de filtre (1) qui est égale à "100", la quantité de métal précieux contenu de ladite partie amont (2) est égale à 150 ou plus.

**4.** Procédé selon la revendication 1, dans lequel le métal précieux contenu dans la structure de filtre (1) est au moins un élément choisi parmi le groupe de Pt, Pd, Rh, Ru, Ir, Ag et Au.

**5.** Procédé selon la revendication 1, dans lequel la structure de filtre (1) prévue dans le filtre catalyseur de la présente invention est formée par l'un quelconque parmi un filtre à écoulement de parois en cordiérite, un filtre à écoulement de parois en carbure de silicium, un filtre à écoulement de parois en céramique, ou un filtre en mousse céramique autre que la cordiérite et en carbure de silicium et en tissu non-tissé métallique.

**6.** Procédé selon la revendication 1, dans lequel le soluté utilisé pour la pâte de revêtement de la structure de filtre (1) est au moins un type parmi $Al_2O_3$, $SiO_2$, $TiO_2$, $ZrO_2$, $CeO_2$, un composé du Ba, un oxyde d'un métal de transition autre que Ti, Zr ou Ce, un oxyde métallique de terres rares, un oxyde métallique alcalin, un métal alcalino-terreux, et des oxydes complexes de ceux-ci.

# FIG.1

EXHAUST GAS
DIRECTION

EXHAUST GAS
DIRECTION

2  3  4

1

# FIG.2

EXHAUST GAS
DIRECTION

EXHAUST GAS
DIRECTION

5

# FIG.3

RELATIVE VALUE WHEN INDEXED TO
AVERAGE VALUE AS "1"

# FIG. 4

INDEXED TO RELATIVE VALUE OF PM COMBUSTION
OF CONVENTIONAL METHOD AT DIFFERENT
TEMPERATURES AS "1"

**EP 1 679 119 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002001124 A
- WO 9847605 A
- JP 61057223 A
- EP 1312776 A
- US 20040176246 A
- EP 1486248 A
- US 20020022272 A
- JP 61025644 B